**Europäisches Patentamt**

**European Patent Office**

**Office européen des brevets**

(11) Publication number : **0 074 734 B2**

(12) # NEW EUROPEAN PATENT SPECIFICATION

(45) Date of publication of the new patent specification : **17.06.92 Bulletin 92/25**

(51) Int. Cl.⁵ : **F16D 59/02, F16D 65/54, F16D 65/32, B60T 17/08**

(21) Application number : **82304448.2**

(22) Date of filing : **24.08.82**

(54) **Actuator for brakes or the like.**

(30) Priority : **09.09.81 GB 8127307**

(43) Date of publication of application :
**23.03.83 Bulletin 83/12**

(45) Publication of the grant of the patent :
**10.12.86 Bulletin 86/50**

(45) Mention of the opposition decision :
**17.06.92 Bulletin 92/25**

(84) Designated Contracting States :
**DE FR GB IT NL SE**

(56) References cited :
**DE-B- 1 239 578**
**FR-A- 779 359**
**FR-A- 2 302 454**
**FR-A- 2 370 194**

(56) References cited :
**FR-A- 2 370 615**
**FR-A- 2 389 043**
**GB-A- 839 604**
**GB-A- 1 012 993**
**US-A- 2 962 000**
**US-A- 3 677 607**
**US-A- 3 759 147**
**US-A- 3 908 804**

(73) Proprietor : **BENDIX LIMITED**
**Douglas Road**
**Kingswood, Bristol BS15 2NL (GB)**

(72) Inventor : **Davies, Hugh Kenvyn**
**3 Princess Close**
**Keynsham Bristol. BS18 2NG (GB)**

(74) Representative : **Turner, Alan Reginald**
**BENDIX LIMITED Douglas Road**
**Kingswood, Bristol BS15 2NL (GB)**

EP 0 074 734 B2

Jouve, 18, rue Saint-Denis, 75001 PARIS

## Description

This invention relates to actuator devices for brakes or the like and relates in particular to an actuator capable of operation by one of two control signal pressures one of which is for spring actuation.

It has already been proposed to provide in combination a pneumatic service brake actuator together with a spring brake actuator for parking or secondary braking. In certain applications, for example in the case of disc brake operation, as wear takes place in the brake the operating stroke becomes longer and the output force from the spring brake is reduced.

In the Specification of U.S. Patent No. 3,908,804 (corresponding to the preamble of claim 1) a combined service and parking hydraulic brake system is described wherein the combined parking and service actuator comprises a pair of pistons in a cylinder. One of the pistons is connected to a force output member and is acted upon by the force of a spring between it and the further piston. The parking brake force is released by applying fluid under pressure to the first mentioned piston acting against the spring and service braking is applied by fluid under pressure acting on the second piston. Brake slack is adjusted by ratchet means acting between the cylinder and the second piston. Therefore only relatively small stroke of the spring is necessary. In this prior art fluid pressure acting on one piston for effecting service brake application is required to oppose fluid pressure acting on another piston which holds the parking brake released. The effective area of the service braking piston may therefore required to be large. This is particularly true if the same concept is to be applied to compressed air brake actuators in which the pressure responsive members are appreciably larger than those of hydraulic brake actuators.

One object of the invention is to provide an actuator for brakes or the like in which it is possible to minimise in a simple manner the stroke of the spring-operated portion without the necessity of having a service brake piston of large effective area.

According to the present invention there is provided an actuator as set out in claim 1.

The first pressure responsive member may be arranged to contain the second pressure responsive member or alternatively the first and second pressure responsive members may be movable one relative to the other within a common cylinder.

In order that the invention may be more clearly understood and readily carried into effect, the same will be further described by way of example with reference to the accompanying drawings of which:

Figs 1 and 2 illustrate schematic sectional or half sectional views of alternative forms of brake actuator device in accordance with the invention, and

Figs. 3, 4 and 5 illustrate a ratchet mechanism for use in the forms of actuator of Figs. 1 and 2.

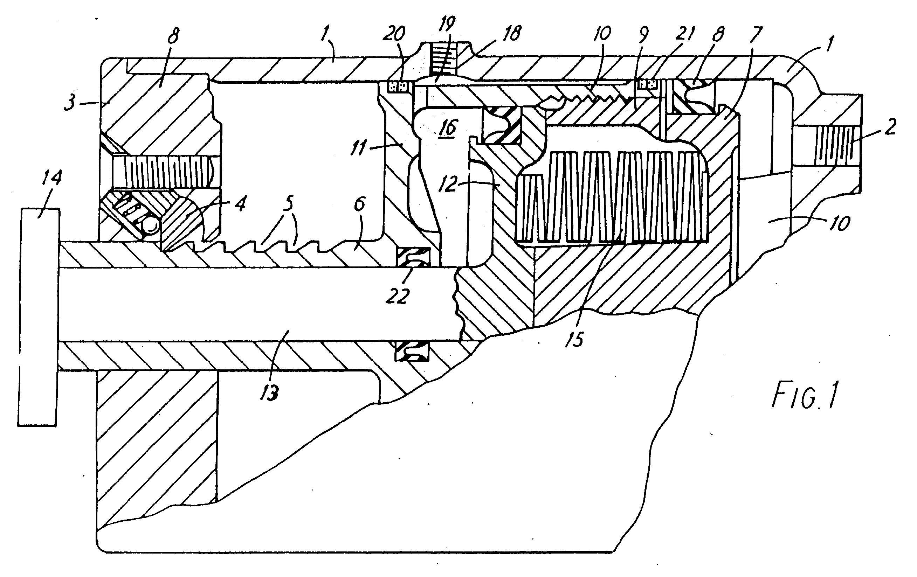

Referring to Fig. 1, this shows a cylindrical housing 1 provided at one end with a first control pressure input port 2 and being enclosed at the other end by an end plate 3. The end plate includes a ratchet mechanism denoted generally by the reference 4 operable in conjunction with ratchet teeth 5 provided on a tubular force output member 6. The cylindrical housing has a first pressure responsive member formed by a piston 7 and associated parts sealingly slideable in the cylindrical bore with a piston seal 8. The piston 7 has a screw threaded skirt 9 threaded into a further skirt 10 of a cylindrical part 11 which itself is integral with the output member 6 and carries a further seal 20 sealingly slideable in the cylinder. The part 10 is itself internally cylindrical and slideable therein there is a second pressure responsive member in the form of a piston 12 having a piston rod 13 extending outwardly of the device through the force output member 6 acting on a pad member 14. Between the piston 12 and the piston 7 there are located spring means in the form of Belleville washers or the like denoted by reference 15 and in the arrangement illustrated, these are shown in the compressed condition owing to hold-off pressure being provided in the chamber 16 between the members 11 and 12. This pressure is derivable from a second input port communicating via a channel 18 through a number of passages such as 19, seals being provided at 20, 21 and 22.

It will be seen that the first pressure responsive member 7 is a relatively long stroke pressure responsive member operable to produce a direct output force via the force output member 6 acting on the pad member 14 for applying a brake. The pressure responsive member 12 however is relatively short stroke pressure responsive member acting between the force output member 6 and the pad 14 to apply the brake.

In normal running operation of the arrangement shown in Fig. 1, the chamber 16 is assumed to be fully pressurised with sufficient air pressure to hold the spring means 15 in the compressed condition and if in addition a control pressure is applied at the first control port 2, the first pressure responsive piston 7 is urged in a direction to drive the force output member 6 outwardly of the housing 1. If the clearance on the brake pads or shoes is such that the forward stroke is greater than the distance between the flank of one ratchet tooth 5 and the flank of the next tooth, plus any necesary override or backlash, the ratchet means 4 will pass over at least one such tooth before the full brake force is applied. Upon subsequent release of air from the port 2, the force output member is permitted to return only by a maximum distance corresponding to the distance between the flank of one ratchet tooth and the flank of the next ratchet tooth plus any necessary override and subsequent backlash. In the event of a secondary or parking brake requirement occurring the application of the spring brake can be effected by release of fluid pressure from the chambe 16 via the second control pressure port. The second pressure responsive piston 12 is thereby moved forward by spring means 15 together with the pressure responsive member 7. Since the output member 6 has been locked into a position corresponding to no more than a predetermined return stroke, the second pressure responsive member 12 requires only to move a short distance corresponding to the said return stroke in order to apply the brake by acting between the force output member and the brake itsef. In order to release the spring brake, hold-off pressure is reapplied via the second signal pressure control port to the chambe 16 and the piston 12 returns to the illustrated position with the spring means 15 fully compressed.

By virtue of the invention, whilst it may be desirable to provide a sufficiently long stroke for the service brake actuator to be able to accommodate wear of the brake pads or shoes, by providing the automatic adjusting means cooperating with a tubular output-member and arranging a seond pressure responsive means which acts between the output member and a brake-element a spring brake portion may be employed with a rod passing through the tubular member and which is of only relatively short stroke.

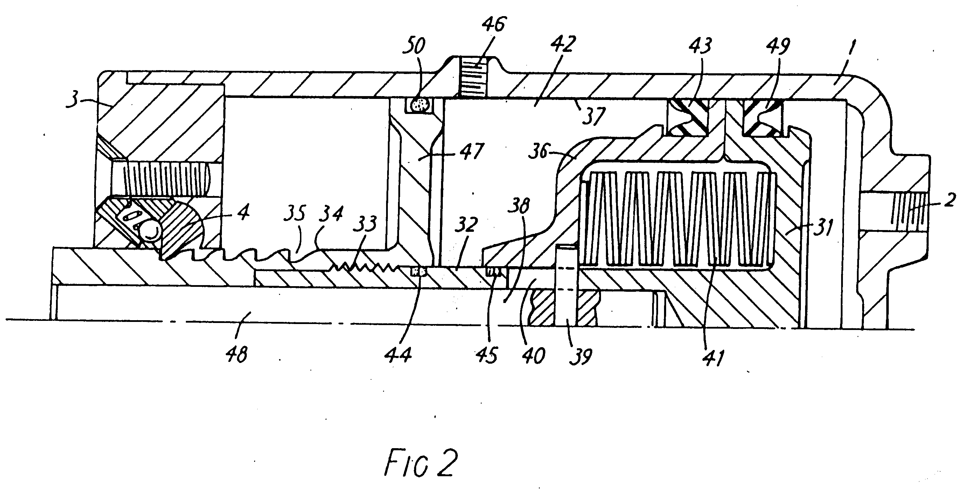

Referring to Fig. 2, this shows an arrangement which is in many ways similar to the arrangement of Fig. 1 to the extent that is equally provides a convenient arrangement with a relatively long stroke service brake actuator and a relatively short stroke spring or secondary brake actuator contained therein. The cylinder housing 1 and the end plate 3 together with ratchet means 4 may be substantially identical with the arrangement of Fig. 1. It is seen however that the first pressure responsive member now has a portion 31 with piston seal 49 and which is provided with a tubular piston rod 32 the outward end of which is screwed at 33 into the force output member 34 which again is provided with ratchet teeth 35. Member 34 also has an integrally moveable wall 47 with a seal 50. Sealingly slideable on the tubular piston rod 32 of the first pressure responsive member is a second pressure responsive member in the form of a piston 36 which is sealingly slideable also in the same bore 37 of the cylindrical housing. The second pressure responsive member 36 is provided with a piston rod 38 which is slideable within the tubular piston rod 32 and is dowelled to the piston 36 by a dowel 39 extending through a short slot 40 in the tubular member 32 a shown. Furthermore, spring means in the form of Belleville washers 41 or the like is provided between the pistons 31 and 36 and in the position shown, these are shown under compression by virtue of the presence of controlling fluid pressure applied via a second port 46 to the chamber 42 acting on the pressure responsive member 36, further seals being provided at 43, 44 and 45 as shown.

The operation of the arrangement in Fig. 2 is substantially the same as that of the arrangement in Fig. 1. That is, assuming that full hold-off pressure exists in the chamber 42, the piston 36 is then in the condition shown holding the spring means 41 under compression and a service pressure applied at the first input port 2 urges the pressure responsive member 31 leftwards to apply the brake via the tubular member 32 and the force output member 34. If the stroke exceeds the distance between flanks of two adjacent ratchet teeth 35, the ratchet mechanism 4 rides over at least one such tooth and on the return stroke, the return movement is limited to no more than the distance between the flanks of two adjacent ratchet teeth plus any other lost motion. In order to apply the secondary or spring brake, the pressure in the chamber 42 is reduced via the second control pressure port with the effect that the spring means 41 act between the first pressure responsive member 31 through the piston 36, the dowel 39, the inner piston rod 38 and the brake. Subsequent recovery of full pressure in the chamber 42 causes return movement of piston 36 to again release the brake.

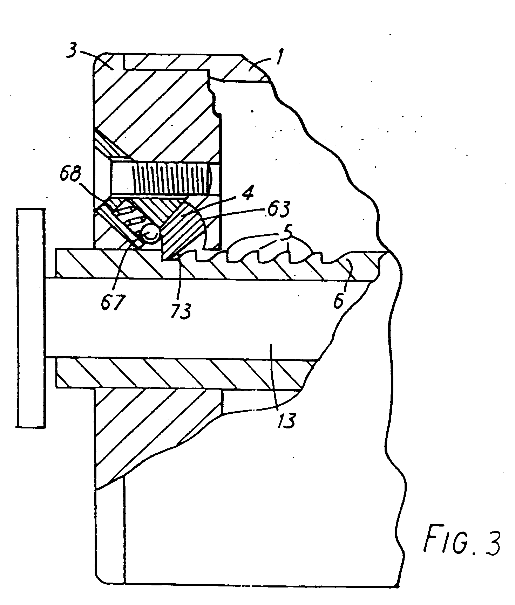

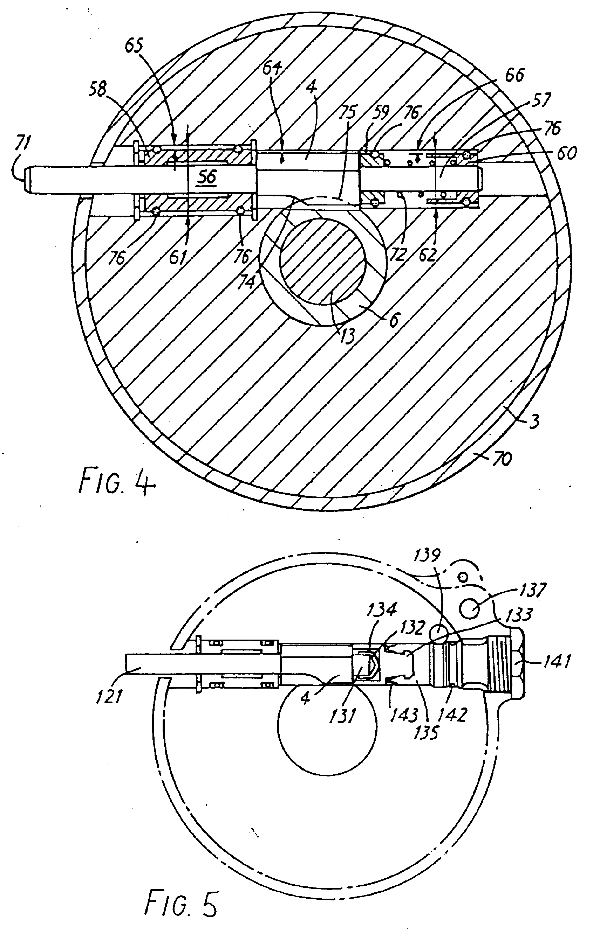

Referring now to the pawl and ratchet mechanism employed in end plate 3 of the actuator devices of Fig. 1 or Fig. 2, this is shown in more detail in Figs 3 and 4. As in other applications of pawl and ratchet mechanisms, where the mechanism is required to withstand appreciable forces, special strength considerations exist. The ratchet mechanism 4 and teeth 5 of Fig. 1 or Fig. 2 are seen to be required to support the full force exerted by the spring brake portion of the actuator.

One flank of each ratchet tooth 5 is substantially perpendicular to the axis and engaging with the pawl 4 which is spring loaded by a spring 68 and a ball 67 and also pivoted as discussed below so that it rotates clockwise and lifts when the push rod moves to engage the oblique flank of the next tooth with the pawl but is restrained against rotation when the push rod moves in the opposite direction to engage a perpendicular flank. This allows unlimited movement of the member 6 in one direction and stricly limited movement in the other. The pawl is arranged to provide a substantial backlash in its operation.

The pawl is pivoted as shown in Fig. 4 on two co-axial cylindrical extensions 56 and 57 which are borne in bearings 58, 59 and 60. These are radially located in bores 61 and 62 by resilient mounting rings 76. These are shown as 'O' rings but could be rings of any cross section and of any resiliently deformable material. The back face 63 of the pawl 4 forms part of a cylinder co-axial with cylindrical extensions 56 and 57. The diameters of the cylindrical extensions of pawl 4, bearings 58, 59 and 60 and of bores 61 and 62 are arranged such that the clearance 64 is small in comparison with the clearances 65 and 66 which are shown exaggerated for clarity.

Thus under the light loads induced by movement of the oblique tooth faces 5 in Fig. 3 against the pawl 4, resisted only by a ball 67 under the influence of a light spring 68 the pawl pivots 56 and 57 remain concentric with the bores 61 and 62, and the pawl is free to rotate within bore 62.

However, on the return stroke when a perpendicular face engages with the pawl 4 and is required to transmit or react a substantial load, only a portion of this load is taken through the bearings as the resilient rings distort until the surface 63 is engaged with the surface of bore 62 and any further load will be taken directly in the cover and consequently the cylindrical body 1.

The pawl may be released from the ratchet to permit the push rod to be retracted, by striking a cylindrical extension 56 on the end 71, thus moving pawl 4 and bearing 59 axially against spring 72 until bearing 59 butts against bearing 60 at which point the pawl 4 will be clear of ratchet teeth.

This axial movement may be effected by other means, e.g., a cam (operated manually or otherwise) or a screw actuator or a fluid operated actuator.

The reaction force on the member 6 causes movement of that item in the release direction until the force applied through that push rod is released.

The pawl may be held out of engagement with the ratchet teeth either manually or by other means until the required retraction is effected.

On release of the pawl it is urged axially under the influence of spring 72 against the ratchet and at such time as it aligns with a space between the teeth will re-engage therewith.

In refinement of this arrangement the rear face 73 of pawl 4 may be chamfered toward the engaging face 74 and the oblique face of each tooth to be chamfered toward the engaging end 75 so that a lead-in is provided and engagement is effected whatever the relative positions of the two parts albeit that in some cases the pawl returns to the rotated and raised position.

A further refinement applicable to a fluid pressure operable service and spring applied parking dis brake actuator is for the spring 72 to be of insufficient strength to re-engage the pawl, but merely of sufficient strength to enable bearing 59 to follow the pawl as it is pushed into engagement. A fluid pressure cylinder may be used to move the pawl into engagement with the ratchet, the fluid being in connection with and at the same pressure as that compressing the brake application spring. This resists any attempt to disengage the pawl unless pressure was released from the spring compression chamber either deliberately or due to leakage.

One embodiment of such an arrangement is shown diagrammatically in section in Fig. 5 wherein the cylindrical extension 57 of pawl 4 in Fig. 4 is shortened to that shown as 131, and runs in bearing 132 (in place of 59 and 60) located in a piston 133 by a resilient ring 34. Pistonchamber 135 is at the same pressure as, and in communication with the spring compression chamber (16 or 42), via passages 137 and 139 formed in the housing. These chambers are thus supplied with fluid pressure conveying fluid from the spring brake system at a pressure determined by a spring brake control valve. A screwed plug 141 provides the end of the cylinder 135 and acts as a stop for piston 133 and carries a seal 142 against loss of fluid or fluid pressure. Access to piston 133 and seal 143 for inspection and maintenance is effected by removal of pluf 141.

In operation, as applied to Fig. 2, upon release of pressure from the spring compression chamber the inner actuator push rod 48 is advanced under the influence of the spring 41, acting through piton pin 39, and reacting on piston assembly held in place by pawl 4 engaging with the ratchet teeth 35. Should fluid pressure be permanently lost due to leakage or cut off during service or maintenance the brake may be released by striking end 121 as described previously disengaging pawl 4 from the ratchet teeth 35 and the outer push rod 34. This action moves piston 133 to the opposite end of cylinder 135. Thereafter re-engagement of the pawl is effected only by the restoration of fluid pressure to the spring compression chamber 42, and consequently to cylinder 135, thereby acting on piston 133 to move pawl 4 into re-engagement with the ratchet. Operation of the service brake after disengagement of the pawl will not result in the pawl preventing retraction of the push rod, as would be the case where the pawl re-engagement was effected by means of a spring.

## Claims

1. An actuator for brakes or the like including a housing (1) having a cylindrical bore, a first pressure signal input port (2), a second pressure signal input port (18;46), a fluid pressure responsive first piston (7, 10, 11; 37, 47) operable in said bore in response to a fluid pressure signal at said first signal input port (2), to execute a forward stroke and to apply an output force to a brake element (14) or the like, an automatic adjusting means (4, 5; 4,35) operable in relation to the first piston for locking thereof relative to the housing (1) against more than a predetermined return stroke and a spring applied and fluid pressure released parking brake means (12, 15; 36, 41) or the like having a spring (15; 41) under compression between the first piston and a second piston (12; 36) responsive to a fluid control pressure at said second signal input port (18; 46) and acting via a piston rod (13; 48) between the first piston (7, 10, 11; 31, 47) and the said brake element (14) to apply the brake or the like characterised by the first piston being provided with a tubular output member (6; 34) having means for effecting said locking relative to the housing, the piston rod (13; 48) being axially movable through the tubular output member (6; 34) and by the first piston (7, 10, 11; 31, 47) having at least two seals (20, 21, 22; 45, 50) which seal the control fluid pressure at the second port (18; 46) of the housing in communication with a space 16; 42) defined between a part (11; 47) of the first piston and the second piston (12;36) to act in a forward direction upon said part of the first piston and to act in the return direction upon the second piston (12; 36) whereby the pressure at the second port generates no net force on the first piston in the return direction

2. An actuator as claimed in claim 1, characterised by the first piston (7, 10, 11; 31, 47) carrying the second piston (12, 36) with it.

3. An actuator as claimed in claim 1 or 2 characterised in that the second piston (12) is sealingly slideable in a cylinder bore formed within the first piston (7, 10, 11).

4. An actuator as claimed in claim 1 or 2 characterised in that the second piston (36) with its seal (43) is sealingly slideable in the same bore (37) as the first piston (31, 47).

5. An actuator as claimed in claim 4 characterised in that the second piston is connected with the piston rod (48) via transverse connecting means (39).

6. An actuator as claimed in any preceding claim, characterised by the adjusting means (4, 5) comprising a pawl (4) and a ratchet (5) the pawl being resiliently mounted to provide solid engagement under load with a housing member (3).

7. An actuator as claimed in claim 6 characterised by the pawl (4) being manually releaseable by an externally projecting member (121).

8. An actuator as claimed in claim 7 characterised by the pawl (4) having an associated fluid pressure responsive member (133) operable to act in a sense to oppose manual release.

9. An actuator as claimed in claim 7 or 8 characterised by the pawl (4) being movable along its axis of rotation for the purposes of release thereof.

10. an actuator as claimed in claim 9 characterised in that the pawl (4) is chamfered to provide a lead-in for re-engagement with the ratchet teeth (5).

**Patentansprüche**

1. Betätigung für Bremsen oder dergleichen, umfassend ein Gehäuse (1) mit einer zylindrischen Bohrung, einer ersten Drucksignaleingangsöffnung (2), einer zweiten Drucksignaleingangsöffnung (18;46), einen auf Fluiddruck ansprechenden ersten Kolben (7,10,11;37,47), der in der Bohrung betätigbar ist beim Ansprechen auf ein Fluiddrucksignal an der ersten Signaleingangsöffnung (2), um einen Vorwärtshub auszuführen und eine Ausgangskraft an ein Bremselement (14) oder dergleichen anzulegen, eine automatische Nachstelleinrichtung (4,5;4,35), die in Relation zu dem ersten Kolben betätigbar ist für dessen Festlegen relativ zu dem Gehäuse (1) gegen mehr als einen vorbestimmten Rückkehrhub, und mit einer mittels Federkraft angelegten und mittels Fluiddruck gelösten Parkbremseinrichtung oder dergleichen (12,15;36,41), die eine unter Druckstehende Feder (15;41) zwischen dem ersten Kolben und einem zweiten Kolben (12;36) aufweist, der auf einen Fluidsteuerdruck an der zweiten Signaleingangsöffnung (18;46) anspricht und über eine Kolbenstange (13;48) zwischen dem ersten Kolben (7,10,11;31,47) und dem Bremselement (14) wirkt, um die bremse oder dergleichen anzulegen, **dadurch gekennzeichnet** , daß der erste Kolben mit einem rohrförmigen Ausgangsteil (6;34) versehen ist, der Mittel zum Bewirken des Festlegens relativ zu dem Gehäuse hat, die Kolbenstange (13;48) durch den rohrförmigen Ausgangsteil (6;34) hinduch axial bewegbar ist, und daß der erste Kolben (7,10,11;31,47) wenigstens zwei Dichtungen (20,21,22;45,50) hat, welche den Steuerfluiddruck an der zweiten Öffnung (18;46) des Gehäuses in Verbindung mit einem Raum (16,42) zwischen einem Teil (11;47) des ersten Kolbens und des zweiten Kolbens (12;36) abdichten, um in einer Vorwärtsrichtung auf den genannten Teil des ersten Kolbens und in Rückwärtsrichtung auf den zweiten Kolben (12;36) zu wirken, wodurch der Druck an der zweiten Öffnung keine Nettokraft auf den ersten Kolben in Rückwärtsrichtung ausübt.

2. Betätigung nach Anspruch 1, dadurch gekennzeichnet, daß der erste Kolben (7,10,11;31,47) den zweiten Kolben (12,36) mit sich trägt.

3. Betätigung nach Anspruch 1 oder 2, dadurch gekennzeichnet, daß der zweite Kolben (12) in einer Zylinderbohrung abgedichtet verschiebbar ist, die in dem ersten Kolben (7,10,11) gebildet ist.

4. Betätigung nach Anspruch 1 oder 2, dadurch gekennzeichnet, daß der zweite Kolben (36) mit seiner Dichtung (43) in der gleichen Bohrung (37) wie der erste Kolben (31,47) abgedichtet verschiebbar ist.

5. Betätigung nach Anspruch 4, dadurch gekennzeichnet, daß der zweite Kolben mit der Kolbenstange (48) über eine Querverbindungseinrichtung (39) verbunden ist.

6. Betätigung nach irgendeinem der vorhergehenden Ansprüche, dadurch gekennzeichnet, daß die Nachstelleinrichtung (4,5) eine Klinke (4) und ein Gesperre (5) aufweist und die Klinke federnd angebracht ist, um massiven Eingriff unter Last mit einem Gehäuseteil (3) zu schaffen.

7. Betätigung nach Anspruch 6, dadurch gekennzeichnet, daß die Klinke (4) durch einen außen vorragenden Teil (121) von Hand lösbar ist.

8. Betätigung nach Anspruch 7, dadurch gekennzeichnet, daß die Klinke (4) einen zugeordneten auf Arbeitsmitteldruck ansprechenden Teil (133) hat, der betätigbar ist, um einer Freigabe von Hand entgegen zu wirken.

9. Betätigung nach Anspruch 7 oder 8, dadurch gekennzeichnet, daß die Klinke (4) entlang ihrer Drehachse für Zwecke ihres Freigebens bewegbar ist.

10. Betätigung nach Anspruch 9, dadurch gekennzeichnet, daß die Klinke (4) angefast ist, um eine Einführung für Wiedereingriff mit den Gesperrezähnen (5) zu schaffen.

## Revendications

1. Commande pour freins ou analogues comprenant un carter (1) présentant un alésage cylindrique, un premier orifice d'entrée (2) de signal de pression, un deuxième orifice d'entrée (18, 46) de signal de pression, un premier piston (7, 10, 11, 37, 47) sensible à la pression pouvant être actionné dans ledit alésage en réponse à un signal de pression de fluide appliqué audit premier orifice d'entrée (2) de signal, pour effectuer une course aller et pour appliquer un effort de sortie à un organe de freinage (14) ou analogue, des moyens de réglage automatique (4, 5 ; 4, 35) pouvant être actionnés en relation avec le premier piston (7, 31) pour bloquer celui-ci par rapport au carter (1) contre une course de retour dépassant une course prédéterminée, et des moyens de freinage de parking ou analogues (12, 15 ; 36, 41) appliqués par un ressort et desserrés par une pression de fluide, comprenant un ressort (15, 41) comprimé entre le premier piston et un second piston (12, 36) sensible à une pression de commande de fluide audit deuxième orifice d'entrée de signal (18, 46) et agissant via une tige de piston (13, 48) entre le premier piston (7, 10, 11 ; 31, 47) et ledit organe de freinage (14) pour appliquer le frein ou analogue, caractérisé en ce que le premier piston est muni d'un organe de sortie tubulaire (6, 34) comprenant des moyens pour effectuer ledit blocage par rapport au carter, la tige de piston (13, 48) étant mobile axialement à travers l'organe de sortie tubulaire (6 ; 34) et en ce que le premier piston (7, 10, 11 ; 31, 47) comprend au moins deux joints (20, 21, 22 ; 45, 50) entre lesquels la pression de fluide de commande appliquée au second orifice (18 ; 66) du carter communique avec un espace (16 ; 42) défini entre une partie (11 ; 47) du premier piston et le deuxième piston (12 ; 36) pour agir vers l'avant sur ladite partie du premier piston et pour agir dans le sens du rappel sur le deuxième piston (12, 36), ce par quoi la pression au deuxième orifice n'engendre aucune force résultante sur le premier piston dans le sens du rappel.

2. Commande suivant la revendication 1, caractérisée en ce que le premier piston (7, 20, 11 ; 31, 47) emporte avec lui le second piston (12, 36).

3. Commande suivant la revendication 1 ou 2, caractérisée en ce que le second piston (12) peut coulisser de façon étanche dans un alésage cylindrique formé à l'intérieur du premier piston (7, 10, 11).

4. Commande suivant la revendication 1 ou 2, caractérisée en ce que le second piston (36) avec son joint d'étanchéité (43) peut coulisser de façon étanche dans le même alésage (37) que le premier piston (31, 47).

5. Commande suivant la revendication 4, caractérisée en ce que le deuxième piston est relié à la tige de piston (48) par l'intermédiaire de moyens de liaison transversaux (39).

6. Commande suivant l'une ou l'autre des revendications précédentes, caractérisée en ce que les moyens de réglage (4, 5) comprennent un cliquet (4) et un rochet (5), le cliquet étant élastiquement monté pour coopérer solidement sous charge avec un élément (3) de carter.

7. Commande suivant la revendication 6, caractérisée en ce que le cliquet (4) peut être dégagé manuellement par un organe (121) saillant extérieurement.

8. Commande suivant la revendication 7, caractérisée en ce que le cliquet (4) comporte un organe (133) associé sensible à la pression de fluide, pouvant être actionné pour agir dans un sens qui s'oppose à un dégagement manuel.

9. Commande suivant la revendication 7 ou 8, caractérisée en ce que le cliquet (4) est mobile le long de son axe de rotation en vue de son dégagement.

10. Commande suivant la revendication 9, caractérisée en ce que le cliquet (4) est chanfreiné pour assurer un guide d'entrée pour son ré-engagement avec les dents (35) du rochet.

FIG.1

EP 0 074 734 B2

FIG 2

EP 0 074 734 B2

FIG. 3

FIG. 4

FIG. 5